# EUROPEAN PATENT APPLICATION

(11) **EP 4 769 541 A1**
(43) Date of publication of application: **01.07.2026**
(21) Application number: 24821237.5
(22) Date of filing: 24.10.2024
(51) Int. Cl.: H01M 4/36, C01B 25/45, H01M 4/136, H01M 4/58, H01M 4/62, H01M 10/0525

(54) **LITHIUM MANGANESE IRON PHOSPHATE MATERIAL, PREPARATION METHOD THEREFOR, POSITIVE ELECTRODE SHEET, AND LITHIUM-ION BATTERY**

(30) Priority: 21.10.2024 CN 202411476928
(71) Applicant: Hubei Wanrun New Energy Technology Co., Ltd., Shiyan, Hubei 442500 (CN)
(72) Inventor: WANG, Qin, Shiyan, Hubei 442500 (CN); HUANG, Zixuan, Shiyan, Hubei 442500 (CN); CHEN, Sanxia, Shiyan, Hubei 442500 (CN); PENG, Tangping, Shiyan, Hubei 442500 (CN)
(74) Representative: Studio Torta S.p.A.
(86) International application number: PCT/CN2024/127095
(87) International publication number: WO 2026/085819

(57) **Abstract**

Provided is a lithium manganese iron phosphate material, a preparation method therefor, a cathode electrode sheet and a lithium-ion battery, which belongs to the field of a lithium-ion battery, wherein the molecular formula of the lithium manganese iron phosphate material is LiₓMn_{y}Fe_{1-y}(PO₄)_{z}, wherein, 0.7≤x≤1.1, 0.15≤y<1, 0.9≤z≤1.05; the manganese dissolution amount is 25 ppm-33 ppm, the powder resistivity is 12 Ω cm-28 Ω·cm, and the amount of magnetic substance is 0.05 ppm-0.12 ppm. The lithium manganese iron phosphate material powder provided has low powder resistivity, small amount of magnetic substance, and significantly reduced manganese dissolution. When used as a cathode electrode active material for the lithium-ion battery, it can enable the corresponding lithium-ion battery to exhibit higher charging and discharging rates and efficiencies, thereby improving the electrical performance and safety stability of the lithium-ion battery.

## Description

### Technical Field

This disclosure relates to the field of lithium-ion battery technology, specifically to a lithium manganese iron phosphate material, a preparation method therefor, a cathode electrode sheet and a lithium-ion battery.

### Background

A lithium-ion battery (Li-ion battery) is a rechargeable battery that uses lithium ions to move between cathode and anode electrodes to store and release energy. The lithium-ion battery has been widely used in the field of new energy vehicles due to its high energy density, long lifespan, and low self discharge rate.

There are many types of cathode electrode materials commonly used in the lithium-ion battery, including lithium cobalt oxide, lithium manganese oxide, lithium nickel oxide, ternary materials, lithium iron phosphate, etc. Phosphate-based lithium intercalation materials with olivine crystal structure, such as LiMPO₄ (M: Mn, Fe, Co, Ni), have great potential as cathode electrode materials for the lithium-ion battery. The charging and discharging platform of lithium iron phosphate (LiFePO₄) is very stable, with a stable structure during the charging and discharging process. At the same time, lithium iron phosphate is non-toxic, pollution-free, and can be used under high-temperature environments. The raw materials used in the preparation of lithium iron phosphate are widely available. Lithium iron phosphate has good electrochemical performance when applied, and is currently the largest type of cathode electrode material for the lithium-ion battery.

However, with the development of lithium iron phosphate, its performance improvement has encountered bottlenecks. On this basis, manganese is introduced to form the cathode electrode material of lithium manganese iron phosphate, which has a higher voltage platform and energy density. However, a current mainstream process for lithium manganese iron phosphate is still the solid-phase process, with commonly used precursors being iron phosphate and manganese oxides. However, during the preparation process, the mixing and solid-phase fusion between the iron phosphate and manganese oxides is relatively poor, resulting in severe segregation of manganese and iron. The obtained lithium manganese iron phosphate has extremely poor conductivity, and its electrical performance is also difficult in the manganese rich region. Meanwhile, during a precipitation reaction, due to the high Kₛₚ of the intermediate product ferrous manganese phosphate, the required environmental pH for its precipitation is relatively high. At high pH values, the reaction system is prone to local over-concentration, causing some ferrous ions to precipitate as hydroxides, resulting in the generation of an impure phase in ferrous manganese phosphate and further affecting the phase purity of the final obtained manganese iron lithium phosphate material. Moreover, due to the phenomenon of local over-concentration during the preparation process mentioned above, it can also affect the nucleation and crystallization process of lithium manganese iron phosphate and intermediate products thereof, thereby affecting the particle size distribution and size uniformity of lithium manganese iron phosphate products, and ultimately leading to poor electrochemical performance in lithium-ion battery electrodes.

In view of this, how to provide a manganese iron phosphate lithium material with low manganese segregation that can exhibit higher electrochemical performance as a cathode electrode active material for the lithium-ion battery is one of the important technical problems that need to be solved in this field.

### Summary

In view of the technical problems existing in the background technology, the present application provides a lithium manganese iron phosphate material, a preparation method therefor, a cathode electrode sheet and a lithium-ion battery, aiming to solve the technical problems of severe manganese dissolution phenomenon and poor electrochemical performance of the active material in the cathode electrode sheet of the lithium-ion battery in the prior art, namely lithium manganese iron phosphate material.

In the first aspect, an embodiment of the present application provides a lithium manganese iron phosphate material, wherein the molecular formula of the core of the lithium manganese iron phosphate material is LiₓMn_{y}Fe_{1-y}(PO₄)_{z}, wherein 0.7≤x≤1.1, 0.15≤y<1, 0.9≤z≤1.05, the manganese dissolution amount of the lithium manganese iron phosphate material is 25 ppm-33 ppm, the powder resistivity is 12 Ω·cm-28 Ω·cm, and the amount of magnetic substance is 0.05 ppm-0.12 ppm.

The lithium manganese iron phosphate material powder provided in the present application has low powder resistivity, small amount of magnetic substance, and significantly reduced manganese dissolution. When used as a cathode electrode active material for the lithium-ion battery, it can enable the corresponding lithium-ion battery to exhibit higher rates and efficiencies of charging and discharging, thereby improving the electrical performance and safety stability of the lithium-ion battery. Moreover, the core of the present application is essentially lithium manganese iron phosphate with a core-shell structure, wherein manganese is located outside the core. Because the migration distance of the external lithium is shorter and it can be better infiltrated by the electrolyte, the capacity of manganese can be better utilized. Correspondingly, the internal lithium iron phosphate has good conductivity, so it does not affect the overall capacity performance of the material, thus making the electrical performance of the obtained lithium manganese phosphate material particularly excellent.

In the technical solution of a preferred embodiment of the present application, the lithium manganese iron phosphate material includes a core and a carbon layer arranged on the surface of the core; a D50 particle size of the lithium manganese iron phosphate material is 1.35 µm-1.9 µm; and based on a weight of the lithium manganese iron phosphate material as 100%, a mass fraction of the carbon layer is 1%-3%.

The particle size of the lithium manganese iron phosphate material provided in the present application is more uniform, and the coordination between the core phosphate and the outer carbon is better, thus exhibiting better electrochemical performance in the lithium-ion battery, resulting in higher electrical performance and better safety stability of the obtained lithium-ion battery.

In some preferred embodiments, in the molecular formula LiₓMn_{y}Fe_{1-y}(PO₄)_{z} of the core of the lithium manganese iron phosphate material, 1≤(1-y)/y≤5.

In the lithium manganese iron phosphate material provided in the present application, the manganese iron element ratio is appropriate, which has more coordinated electrochemical performance, thereby enabling the corresponding lithium-ion battery to have better performance.

In the second aspect, an embodiment of the present application provides a preparation method for a lithium manganese iron phosphate material, which includes: mixing an iron source with a phosphoric acid solution, performing a first reaction, and obtaining a ferrous dihydrogen phosphate solution; adding a manganese salt and a first alkali source to the ferrous dihydrogen phosphate solution for a second reaction to obtain a ferrous manganese phosphate slurry; adding a lithium salt and a second alkali source to the ferrous manganese phosphate slurry, performing a third reaction, filtering and washing to obtain a first product, slurrying and drying the first product to obtain a second product, and calcining the second product to obtain a lithium manganese phosphate material; and the first and second alkali sources are urea.

Compared with the traditional solid-phase method, the above-mentioned preparation method can obtain lithium manganese iron phosphate with a core-shell structure, wherein manganese is located outside the core. Because the migration distance of the external lithium is shorter and it can be better infiltrated by the electrolyte, the capacity of manganese can be better utilized. The internal lithium iron phosphate, due to its good conductivity, does not affect its capacity performance, thus making the electrical performance of the lithium manganese iron phosphate material excellent. Specifically, the ferrous dihydrogen phosphate solution is obtained through the first reaction; in the second reaction, the slow decomposition of urea is utilized to gradually increase a pH value of the reaction system, resulting in the sequential precipitation of ferrous ions and manganese ions in the form of phosphate and reducing the formation of a ferrous hydroxide impure phase, making the mixing of manganese and iron elements more uniform; the third reaction further utilizes the decomposition of urea to slowly increase the pH value, causing lithium ions in the added lithium salt to precipitate in the form of phosphate. The various reaction steps work together to make the mixing of lithium, manganese, iron, and phosphorus more uniform, resulting in a manganese iron lithium phosphate material with better electrochemical performance.

In the technical solution of a preferred embodiment of the present application, a molar ratio of the first alkali source to ferrous dihydrogen phosphate in the ferrous dihydrogen phosphate solution is (2.2-2.5):1, so that when urea as the first alkali source decomposes to produce ammonia and reacts with hydrogen ions in dihydrogen phosphate, it can better promote the gradual increase of the pH value in the reaction system, thereby obtaining a lithium manganese phosphate material with higher purity and better electrochemical performance; preferably, a molar ratio of the second alkali source to the first alkali source is (0.3-0.6):1, so that the urea added to the reaction system twice can be better coordinated in terms of the amount added, thereby better controlling the change in the pH value of the system and obtaining a lithium manganese iron phosphate material with more outstanding electrochemical performance.

In some preferred embodiments, a molar ratio of the manganese element in the manganese salt to the iron element in the ferrous dihydrogen phosphate solution is (0.2-1):1, and a molar ratio of the sum of the manganese element in the manganese salt and the iron element in the ferrous dihydrogen phosphate solution to the lithium element in the lithium salt is 1:(1.08-1.1), in order to form the above-mentioned core-shell structure and obtain a lithium manganese iron phosphate material with more stable structure and better cycling performance in the lithium-ion battery; and preferably, the iron source is iron sheet and/or iron powder, the manganese salt is selected from one or more of manganese sulfate, manganese chloride, and manganese acetate, and the lithium salt is selected from one or more of lithium sulfate, lithium chloride, and lithium acetate. The use of the divalent manganese salts and ferrous salts mentioned above can effectively save costs, reduce the introduction of impurities and the generation of waste gas during subsequent calcination processes, and ultimately significantly improve material purity, making it exhibit more stable long cycle characteristics in the lithium-ion battery.

In some preferred embodiments, a temperature of the first reaction is 50°C-70°C, and a pH value of the ferrous dihydrogen phosphate solution is 2.0-2.5, thereby obtaining a ferrous dihydrogen phosphate solution with higher purity and improving its dispersibility for subsequent processes; and preferably, a concentration of the phosphoric acid solution is 3 mol/L-6 mol/L to facilitate better dissolution of the iron source and obtain a ferrous dihydrogen phosphate solution with better dispersibility, thereby promoting the improvement of the particle size uniformity of the obtained intermediate and final product.

In some preferred embodiments, a temperature of the second reaction is 95°C-105°C, and a endpoint pH value of the second reaction is 4.5-5.5, in order to obtain an intermediate product with more stable structure and using ferrous phosphate as the core and manganese phosphate as the shell; and preferably, the second reaction further includes continuing to react for 30 min-60 min after reaching the endpoint pH value of the second reaction, so as to make the co-precipitation reaction more thorough, significantly improve the mixing uniformity of each element in the structure of obtained intermediate product ,as well as the particle size uniformity of the intermediate product itself, stabilize its chemical structure, and thereby improve its electrochemical performance, especially reducing the dissolution of manganese and making its chemical performance more stable.

In some preferred embodiments, the second reaction is preferably performed under conditions where the oxygen content is less than 100 ppm, thereby reducing the generation of oxygen-containing compound impurities during the reaction process, improving the purity of the lithium manganese iron phosphate material, and ultimately resulting in superior electrical performance of a lithium-ion battery prepared by using the lithium manganese iron phosphate material as a cathode electrode active material.

In some preferred embodiments, a temperature of the third reaction is 100°C-110°C, and a endpoint pH value of the third reaction is 7.1-7.5, in order to form more uniform lithium phosphate on the surface of ferrous manganese phosphate, thereby more effectively suppressing the dissolution of manganese in subsequent applications, improving the electrochemical performance of the lithium manganese iron phosphate material , especially stability; preferably, the third reaction further includes continuing to react for 30 min-60 min after reaching the endpoint pH value of the third reaction, and preferably, the third reaction is performed under conditions where the oxygen content is less than 50 ppm, thereby further reducing impurities and improving the purity of the obtained lithium manganese phosphate material.

In some embodiments, the preparation method for the lithium manganese iron phosphate material also includes: slurrying the first product to obtain a first product slurry, adding a carbon source to the first product slurry, and performing spray drying to obtain the second product. The present application further utilizes a carbon source, which coated on the surface of the obtained lithium manganese iron phosphate material to enhance its structural stability and conductivity.

In some embodiments, the solid content of the first product slurry is 30%-40%, the particle size of the second product is 5 µm-8 µm, and a mass fraction of water in the second product is less than or equal to 1%, thereby making the carbon layer coating more uniform. At the same time, the particle size uniformity of the obtained material is controlled to exhibit more stable electrochemical performance; and preferably, the carbon source is a water-soluble carbon source, and more preferably one or more of water-soluble starch, sucrose, glucose, and polyethylene glycol. These carbon sources can be combined with the above-mentioned lithium manganese iron phosphate core to form a more uniform and stable carbon layer on the surface of the lithium manganese iron phosphate core, effectively improving the electrochemical performance of the lithium manganese iron phosphate material electrochemical performance.

In some embodiments, calcination is performed under the conditions of the oxygen content less than 5 ppm and humidity less than 3%, and the holding temperature is 700°C-750°C, and the holding time is 8 h-15 h. Under these conditions, calcination can make the content of the magnetic substance in the obtained lithium manganese phosphate product lower and the electrochemical performance more excellent.

In the third aspect, an embodiment of the present application provides a cathode electrode sheet, wherein the cathode electrode sheet includes the above-mentioned lithium manganese iron phosphate material, or the lithium manganese iron phosphate material prepared by the above-mentioned preparation method for the lithium manganese iron phosphate material. The cathode electrode sheet contains the above-mentioned manganese iron lithium phosphate material with low manganese dissolution, low powder resistivity, and low magnetic substance, thus possessing high electrochemical performance.

In the fourth aspect, an embodiment of the present application provides a lithium-ion battery comprising the cathode electrode sheet as described above. Due to the good electrochemical performance and structural stability of the above-mentioned lithium manganese iron phosphate material obtained in the present application, when applied as a cathode electrode sheet component in a lithium-ion battery, the obtained lithium-ion battery also has comprehensively improved electrochemical performance, especially in terms of first charging capacity, first discharging capacity, and first discharging efficiency.

The foregoing description is merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### Brief Description of the Drawings

To describe the technical solution of the present application more clearly, the following briefly describes the accompanying drawings used in the present application. Apparently, the accompanying drawings in the following descriptions show merely some embodiments of the present application, and those of ordinary skill in the art may still derive other drawings from the accompanying drawings without creative efforts.
FIG. 1 is an SEM result diagram of the lithium manganese iron phosphate cathode electrode material obtained in Example 1 of the present application;
FIG. 2 is an XRD pattern of the lithium manganese iron phosphate cathode electrode material obtained in Example 1 of the present application;
FIG. 3 is an EDS result diagram of the elemental composition of the lithium manganese iron phosphate cathode electrode material obtained in Example 1 of the present application;
FIG. 4 is an SEM result diagram of the lithium manganese iron phosphate cathode electrode material obtained in Example 2 of the present application;
FIG. 5 is an XRD pattern of the lithium manganese iron phosphate cathode electrode material obtained in Examples 2 and 3 of the present application;
FIG. 6 is an SEM result diagram of the lithium manganese iron phosphate cathode electrode material obtained in Example 3 of the present application;
FIG. 7 is a process flowchart of the preparation method of the lithium manganese iron phosphate material provided in the embodiments of the present application.

### Detailed Description of the Embodiments

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; and the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

As described in the background technology, the active material in the cathode electrode sheet of the lithium-ion battery in the prior art, namely the lithium manganese iron phosphate material, has serious manganese dissolution and poor electrochemical performance.

In order to solve the above-mentioned technical problems, in the first aspect, an embodiment of the present application provides a lithium manganese iron phosphate material, wherein the molecular formula of the core of the lithium manganese iron phosphate material is LiₓMn_{y}Fe_{1-y}(PO₄)_{z}, wherein 0.7≤x≤1.1, 0.15≤y<1, 0.9≤z≤1.05; the manganese dissolution amount of the lithium manganese iron phosphate material is 25 ppm-33 ppm, the powder resistivity is 12 Ω·cm-28 Ω·cm, and the amount of magnetic substance is 0.05 ppm-0.12 ppm.

The lithium manganese iron phosphate material has a low powder resistivity. When used as a cathode electrode active material for the lithium-ion battery, it can enable the corresponding lithium-ion battery to exhibit higher rates and efficiencies of charging and discharging, thereby improving the overall performance of the lithium-ion battery. At the same time, the amount of magnetic substance in the obtained lithium manganese iron phosphate material is lower, which is beneficial for the safety performance of lithium manganese iron phosphate, resulting in better safety and lower self discharge of the final prepared battery cells. Specifically, during the calcination process of lithium manganese iron phosphate, a reducing gas is generated, which has a reducing effect on the manganese and iron elements in the material. When reduced, the electron arrangement of iron and manganese will change. The number of unpaired electrons in iron will increase, resulting in enhanced magnetism; and although the number of unpaired electrons in manganese is relatively small, its magnetism will still be enhanced. When the content of these two magnetic substances increases, they can be easily eroded by an electrolyte, causing metal deposition under electrochemical action, resulting in black spots on a diaphragm, affecting the cycling performance, safety performance, and self discharge of the battery cell.

The manganese iron lithium phosphate material provided in the present application has a manganese dissolution amount of 25 ppm-33 ppm, that is, the manganese dissolution is significantly reduced, which is beneficial for maintaining the structural stability of the cathode electrode material, thereby improving the cycle life of the battery, and can also reduce the phase change of the cathode electrode material during charging and discharging, thereby improving the capacity retention of the battery. This means that after long-term use, the capacity loss of the battery is relatively small, and it can maintain a high energy density. In particular, manganese dissolution may cause the lattice structure of the material to be damaged, thereby affecting the normal extraction/insertion of lithium ions during charging and discharging. Therefore, the reduction of manganese dissolution helps the cathode electrode material maintain the structural integrity of the material, thereby improving its thermal stability. Thermal stability is crucial for the safety performance of a battery, especially in high-temperature environments. A battery with good thermal stability is less likely to experience thermal runaway and has better safety performance. At the same time, manganese dissolution can cause manganese to deposit on the diaphragm under electrochemical action, making it easy to pierce the diaphragm and cause micro short circuits in the battery cell.

In the technical solution of a preferred embodiment of the present application, the lithium manganese iron phosphate material includes a core and a carbon layer arranged on the surface of the core; a D50 of the lithium manganese iron phosphate material is 1.35 µm-1.9 µm; and based on the weight of the lithium manganese iron phosphate material as 100%, a mass fraction of the carbon layer is 1%-3%. The particle size of the lithium manganese iron phosphate material provided in the present application is more uniform, and the coordination between the core phosphate and the outer carbon is better, thus exhibiting better electrochemical performance in the lithium-ion battery, resulting in higher electrical performance and better safety stability of the obtained lithium-ion battery.

In some preferred embodiments, in the molecular formula LiₓMn_{y}Fe_{1-y}(PO₄)_{z} of the lithium manganese iron phosphate material, 1≤(1-y)/y≤5. In the lithium manganese iron phosphate material provided in the present application, the ratio of each element is appropriate, which has more coordinated electrochemical performance, thereby enabling the corresponding lithium-ion battery to have better performance.

In particular, the phosphate core provided in the present application is essentially lithium manganese iron phosphate with a core-shell structure, wherein manganese is located outside the core. Because the migration distance of the external lithium is shorter and it can be better infiltrated by the electrolyte, the capacity of manganese can be better utilized. Correspondingly, the internal lithium iron phosphate has good conductivity, so it does not affect the overall capacity performance of the material, thus making the electrical performance of the obtained lithium manganese phosphate material particularly excellent.

In the second aspect, an embodiment of the present application provides a preparation method for a lithium manganese iron phosphate material, which includes: mixing an iron source with a phosphoric acid solution, performing a first reaction, and obtaining a ferrous dihydrogen phosphate solution; adding a manganese salt and a first alkali source to the ferrous dihydrogen phosphate solution for a second reaction to obtain a ferrous manganese phosphate slurry; adding a lithium salt and a second alkali source to the ferrous manganese phosphate slurry, performing a third reaction, filtering and washing to obtain a first product, slurrying and drying the first product to obtain a second product, and calcining the second product to obtain a lithium manganese phosphate material; and the first and second alkali sources are urea.

The above-mentioned preparation method provided in the present application first uses homogeneous precipitation method to prepare ferrous manganese phosphate, that is: first, preparing ferrous dihydrogen phosphate by adding iron and phosphoric acid; then, mixing a ferrous salt and a manganese salt in sequence, and supplementing with urea which decomposes in the reaction to produce ammonia and reacts with hydrogen ions in dihydrogen phosphate, gradually increasing the pH and avoiding local over-concentration; and finally, obtaining ferrous manganese phosphate with a purer phase and more uniform particle size, and at this point, ferrous phosphate serves as the core, and manganese phosphate grows on the surface of ferrous phosphate. Further mixing a lithium salt and urea can form uniform lithium phosphate on the surface of ferrous manganese phosphate. The characteristic of different pH values for precipitation of phosphates of manganese, iron, and lithium in the reaction process is utilized, that is: first, at a lower pH, increasing the pH gradually through slow decomposition of urea, and then precipitating iron and manganese in the form of phosphate first; then, adding the lithium salt, and continuing to add urea, and raising the temperature to control the pH to further increase to precipitate lithium element in the form of phosphate, and due to the factors of homogeneous precipitation and urea decomposition rate, preferably precipitating the precipitate by heterogeneous nucleation, forming a homogeneous mixed co-precipitation of lithium, manganese, iron, and phosphorus; after that, sequentially slurrying, drying, and calcining to obtain a manganese iron lithium phosphate material with low manganese dissolution amount, powder resistivity, and magnetic substance content. Electrochemical performance of the lithium manganese iron phosphate is more outstanding, and after being applied to a lithium-ion battery, the performance of the battery is significantly improved.

Compared with traditional solid-phase methods, the above-mentioned preparation method can achieve manganese iron lithium phosphate with a core-shell structure. The external manganese can better utilize the capacity of manganese because the migration distance of lithium is shorter and it can be better infiltrated by the electrolyte. The internal lithium iron phosphate, due to its good conductivity, does not affect its capacity performance, thus making the electrical performance of the final material excellent. At the same time, the element distribution in the obtained material is uniform, especially the arrangement of manganese and iron elements are uniform, which avoids the segregation of manganese elements and thus increases the capacity of the material. The segregation of manganese alone can cause the aggregation of lithium manganese phosphate, and the poor ionic conductivity of lithium manganese phosphate will prevent lithium from being removed, resulting in a decrease in charging and discharging capacity. The material prepared by the preparation method provided in the present application avoids the occurrence of the above situation due to the uniform mixing of manganese and iron, thus making the capacity of the final prepared lithium-ion battery higher and the subsequent cycling performance more excellent.

Moreover, the above-mentioned method provided in the present application does not require mixing, grinding, or other processes, and can achieve uniform mixing of multiple elements such as manganese, iron, phosphorus, and lithium. Specifically, the preparation method provided in the present application successfully achieves uniform mixing of various elements in the lithium manganese iron phosphate material through two consecutive co-precipitation steps, namely the second reaction and the third reaction, resulting in a cathode electrode material with a more complete and stable lattice structure. The conventional solid-phase method requires processes such as mixing, slurrying, grinding, and nanomaterialization, which has a long process flow and poor mixing effect. Compared with this, the preparation method for the lithium manganese iron phosphate material provided in the present application has a simpler process and better mixing effect. Meanwhile, the preparation method for the lithium manganese iron phosphate material provided in the present application eliminates oxidation, drying, grinding and other processes compared to traditional processes. According to actual calculations, the cost of these process steps is approximately 4,000 yuan/ton, and adding the cost of the reduction of oxidants and carbon reduction, it can be roughly estimated that the cost reduction per ton of product (lithium manganese iron phosphate) compared to traditional solid-phase methods is 4,300 yuan/ton. Calculated based on a production line with an annual output of 10,000 tons, the cost savings reach 43 million yuan, and the economic value is very huge.

The cathode electrode material obtained by calcination in the present application is then crushed, screened, and packaged to ultimately obtain a cathode electrode material that can be used as a product for practical applications.

In the technical solution of a preferred embodiment of the present application, a molar ratio of the first alkali source to ferrous dihydrogen phosphate in the ferrous dihydrogen phosphate solution is (2.2-2.5):1, so that when urea as the first alkali source decomposes to produce ammonia and reacts with hydrogen ions in dihydrogen phosphate, it can better promote the gradual increase of the pH in the reaction system, thereby obtaining a lithium manganese phosphate material with higher purity and better electrochemical performance. It is further preferred by the inventors through numerous experiments that a molar ratio of the second alkali source to the first alkali source is (0.3-0.6):1, so that the urea added to the reaction system twice can be better coordinated in terms of the amount added, thereby better controlling the change in the pH of the system and obtaining a lithium manganese iron phosphate material with more outstanding electrochemical performance.

In some preferred embodiments, in order to obtain a ferrous dihydrogen phosphate solution with higher purity and improve its dispersibility for subsequent processes, a preferred temperature for the first reaction is 50°C-70°C, and a pH value of the ferrous dihydrogen phosphate solution is 2.0-2.5. At the same time, a preferred concentration of the phosphoric acid solution is 3 mol/L-6 mol/L to facilitate better dissolution of the iron source and obtain a ferrous dihydrogen phosphate solution with better dispersibility, thereby promoting the improvement of the particle size uniformity of the obtained intermediate and final product.

In some preferred embodiments, a temperature of the second reaction is 95°C-105°C, and a endpoint pH value of the second reaction is 4.5-5.5, in order to obtain an intermediate product with more stable structure and using ferrous phosphate as the core and manganese phosphate as the shell. Furthermore, it is preferred by the inventors through numerous experiments that the second reaction further includes continuing to react for 30 min-60 min after reaching the endpoint pH value of the second reaction, so as to significantly improve the particle size uniformity of the obtained intermediate product, stabilize its chemical structure, and thereby improve its electrochemical performance, especially reducing the dissolution of manganese and making its chemical performance more stable.

It should be noted that the endpoint pH value in the present application means that when the reaction system reaches a specific pH value, it is considered that the reaction has basically completed. As for the reaction that continues for a period of time after reaching its endpoint pH value, it is still performed at the same temperature and stirring speed.

In some preferred embodiments, in order to make the reaction proceed more fully, the stirring speed of the second reaction is preferably 60 r/min-120 r/min, and thus an intermediate product with higher particle size uniformity is obtained, and the performance of the final obtained lithium manganese phosphate material is effectively optimized. The second reaction is preferably performed under conditions where the oxygen content is less than 100 ppm, thereby reducing the generation of oxygen-containing compound impurities during the reaction process, improving the purity of the lithium manganese iron phosphate material, and ultimately resulting in superior electrical performance of a lithium-ion battery prepared by using the lithium manganese iron phosphate material as a cathode electrode active material.

In some preferred embodiments, a temperature of the third reaction is 100°C-110°C, and a endpoint pH value of the third reaction is 7.1-7.5. It is preferred by the inventors through numerous experiments that in order to form more uniform lithium phosphate on the surface of ferrous manganese phosphate, thereby more effectively suppressing the dissolution of manganese in subsequent applications, improving its electrochemical performance, especially stability. In order to ensure that the reaction for forming lithium phosphate can proceed more fully, preferably, the third reaction further includes continuing to react for 30 min-60 min after reaching the endpoint pH value of the third reaction. It is more preferred to perform the third reaction under conditions where the oxygen content is less than 50 ppm, in order to further reduce impurities and improve the purity of the obtained manganese iron lithium phosphate material.

In some preferred embodiments, in order to better form the above-mentioned core-shell structure and obtain a lithium manganese iron phosphate material with more stable structure and better cycling performance in the lithium-ion battery, the inventors optimize the addition ratio of each element in the core and shell through numerous experiments, and specifically, a preferred molar ratio of the manganese element in the manganese salt to the molar amount of iron element in the ferrous dihydrogen phosphate solution is (0.2-1):1, and a preferred molar ratio of the sum of the manganese element in the manganese salt and the iron element in the ferrous dihydrogen phosphate solution to the lithium element in the lithium salt is 1:(1.08-1.1). Preferably, the iron source is iron sheet and/or iron powder, the manganese salt is selected from one or more of manganese sulfate, manganese chloride, and manganese acetate, and the lithium salt is selected from one or more of lithium sulfate, lithium chloride, and lithium acetate. It is preferred by the inventors through numerous experiments that the divalent manganese salt and ferrous salt, etc. are used, which do not require the addition of an oxidant in the preparation process to synthesize iron phosphate like traditional processes. At the same time, in the final calcination process, there is no need to consume additional carbon to reduce metal ions in high valance state, so as to effectively save costs, reduce the introduction of impurities and the generation of waste gas during subsequent calcination processes, and ultimately significantly improve material purity, making it exhibit more stable long cycle characteristics in the lithium-ion battery.

In some preferred embodiments, the preparation method for the lithium manganese iron phosphate material also includes: slurrying the first product to obtain a first product slurry, adding a carbon source to the first product slurry, and drying to obtain the second product. The present application further utilizes a carbon source, which coated on the surface of the obtained lithium manganese iron phosphate material to enhance its structural stability and conductivity.

Moreover, the preferred drying is spray drying.

In some preferred embodiments, in order to make the carbon layer coating more uniform and improve the particle size uniformity of the obtained material to exhibit more stable electrochemical performance, it is preferred that the solid content of the first product slurry is 30%-40%, the particle size of the second product is 5 µm-8 µm, and a mass fraction of water in the second product is less than or equal to 1%. The solid content here refers to a mass fraction of insoluble solid particles in the first product slurry. It is further preferred by the inventors through numerous experiments that the carbon source is a water-soluble carbon source, more preferably one or more of water-soluble starch, sucrose, glucose, and polyethylene glycol, so that the carbon source can be combined with the above-mentioned lithium manganese iron phosphate core to form a more uniform and stable carbon layer on the surface of the lithium manganese iron phosphate core, effectively improving the electrochemical performance of the lithium manganese iron phosphate material.

In some preferred embodiments, calcination is performed under the conditions of the oxygen content less than 5 ppm, the CO content less than 50 ppm, the hydrogen content less than 100 ppm, and the humidity less than 3%, with the heating rate of 300°C/h-400°C/h, the holding temperature of 700°C-750°C, and the holding time of 8 h-15 h. The inventors performed numerous experiments and optimized the calcination conditions to obtain the above-mentioned solution. Under the above-mentioned condition, calcination reduces the production of additional waste gases (such as lithium salt decomposition, oxidation-reduction, etc.) in addition to the crystal water and carbon source decomposition of the material itself, thereby making the atmosphere inside the furnace more stable (because the main components of the waste gas are H₂O and CO₂, which react with hot carbon at high temperatures to produce gases such as H₂ and CO, consume carbon and cause incomplete carbon coating, and the strong reducibility of the produced gases such as H₂ and CO may reduce iron to elemental state, resulting in a magnetic substance and causing a safety risk such as a micro short circuit and a dendrite in the battery), and making the magnetic substance content in the obtained lithium manganese phosphate product lower and the electrochemical performance more excellent.

In the third aspect, an embodiment of the present application provides a cathode electrode sheet, wherein the cathode electrode sheet includes the above-mentioned lithium manganese iron phosphate material, or the lithium manganese iron phosphate material prepared by the above-mentioned preparation method for the lithium manganese iron phosphate material.

In this embodiment, the cathode electrode sheet contains the above-mentioned manganese iron lithium phosphate material with low manganese dissolution, low powder resistivity, and low magnetic substance, thus possessing high electrochemical performance.

In the fourth aspect, an embodiment of the present application provides a lithium-ion battery comprising the cathode electrode sheet as described above.

In this embodiment, due to the good electrochemical performance and structural stability of the above-mentioned lithium manganese iron phosphate material obtained in the present application, when applied as a cathode electrode sheet component in a lithium-ion battery, the obtained lithium-ion battery also has comprehensively improved electrochemical performance, especially in terms of first charging and discharging capacity, and first discharging efficiency.

### I. Preparation method

### Example 1

Preparation of a lithium manganese iron phosphate material:
1. An electrolytic iron powder was used and 4.5 mol/L phosphoric acid solution was added, reacted until the endpoint pH was 2.3 at the reaction temperature of 60°C, and filtered to obtain a ferrous dihydrogen phosphate solution;
2. manganese acetate was added to the ferrous dihydrogen phosphate solution, wherein a molar ratio of the iron in the ferrous dihydrogen phosphate solution to the manganese in the added manganese acetate was 1:1, then urea was added with a molar amount being 2.4 times that of ferrous dihydrogen phosphate, stirred to react in a sealed reaction vessel under protection of introduced nitrogen gas, and the oxygen content in the sealed reaction vessel was reduced to below 100 ppm by introduction of nitrogen gas, the solution was heated to react at a stirring speed of 100 r/min and a temperature of 100°C, then the endpoint pH was controlled at 4.9 to continue the reaction for 50 min under this condition to obtain a ferrous manganese phosphate slurry;
3. urea and lithium chloride was further added to the ferrous manganese phosphate slurry, wherein a molar ratio of the lithium in the added lithium salt to the sum of the added ferrous salt and manganese salt was 1.09:1, a molar ratio of the added urea to the urea added in step 2 was 0.45:1, the temperature was further maintained at 105°C for reacting, nitrogen gas was further introduced to keep the oxygen content in the sealed reaction vessel below 50 ppm, the endpoint pH was controlled to 7.3 to continue the reaction for 50 min under this condition, then filtered and washed with pure water until the conductivity of the washing water was ≤200 µS/cm, and the washing was stopped to obtain a first product;
4. pure water was added to the first product for slurrying, and after slurrying, the solid content of the slurry was 35 wt%, then water-soluble starch was added as a carbon source (which was converted into a carbon layer in the subsequent calcination process), and after stirring and dissolving, spray drying was performed, the particle size of a spray material was 5.6 µm, and the water content was controlled at ≤1 wt% to obtain a spray drying material, that is, a second product; and
5. the spray drying material was put into an atmosphere furnace for calcination, the calcination process was performed under the protection of nitrogen atmosphere, wherein the heating rate was 350°C/h, the temperature was raised to 725°C to be kept for 12 h at this temperature, and during the calcination process, nitrogen gas was constantly introduced into the furnace, at the same time, an induced draft fan was connected externally to extract waste gas, the pressure in the furnace was 40 Pa higher than the external atmospheric pressure, the oxygen content in the atmosphere furnace was maintained below 5 ppm, the CO content was below 50 ppm, the hydrogen content was below 100 ppm, the humidity was below 3%, then the material temperature was reduced to ≤100°C before being discharged, the material after calcination was crushed and sieved by a 150 mesh ultrasonic vibrating screen, an electromagnetic iron remover was used for iron removal, the packaging process was vacuum packed in a constant temperature and humidity room at a temperature of 20°C-25°C and a humidity of ≤10%, and the lithium manganese iron phosphate material with a mass fraction of the carbon layer of 1.85% and the molecular formula of the core of Li_{1.05}Mn_{0.50}Fe_{0.50}(PO₄)_{1.04} was obtained.

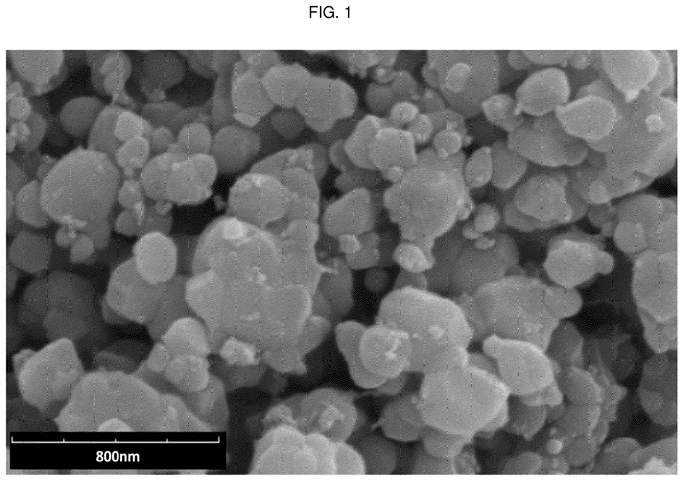

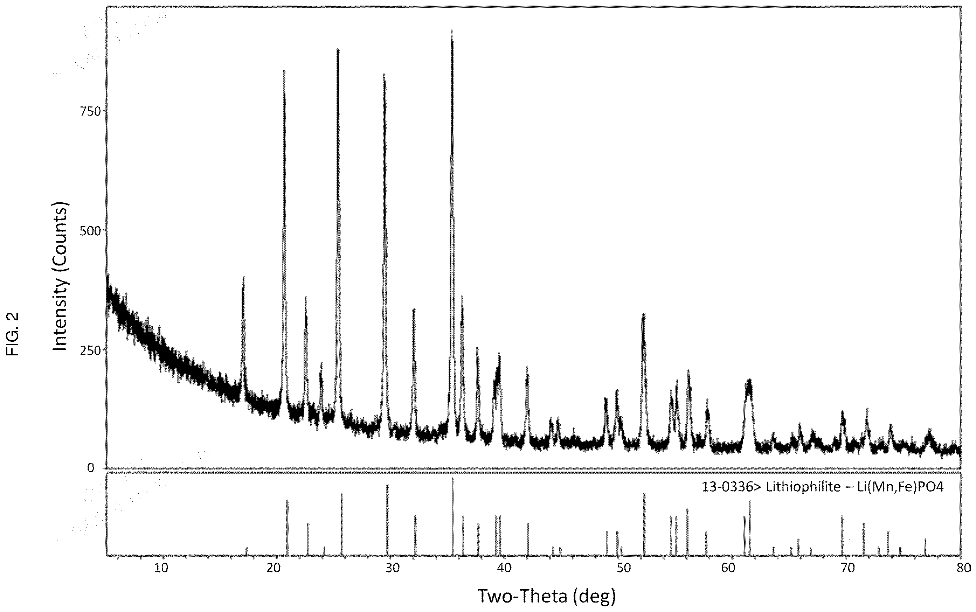

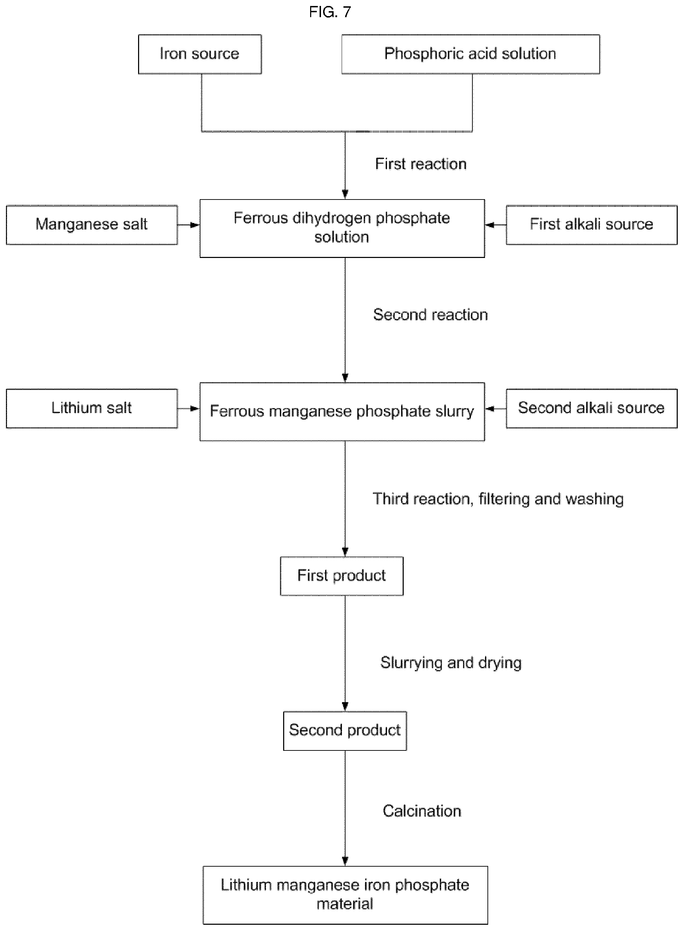

The process flow of the above-mentioned preparation method is shown in FIG. 7, an SEM result diagram of the obtained lithium manganese iron phosphate cathode electrode material is shown in FIG. 1, and an XRD result diagram is shown in FIG. 2.

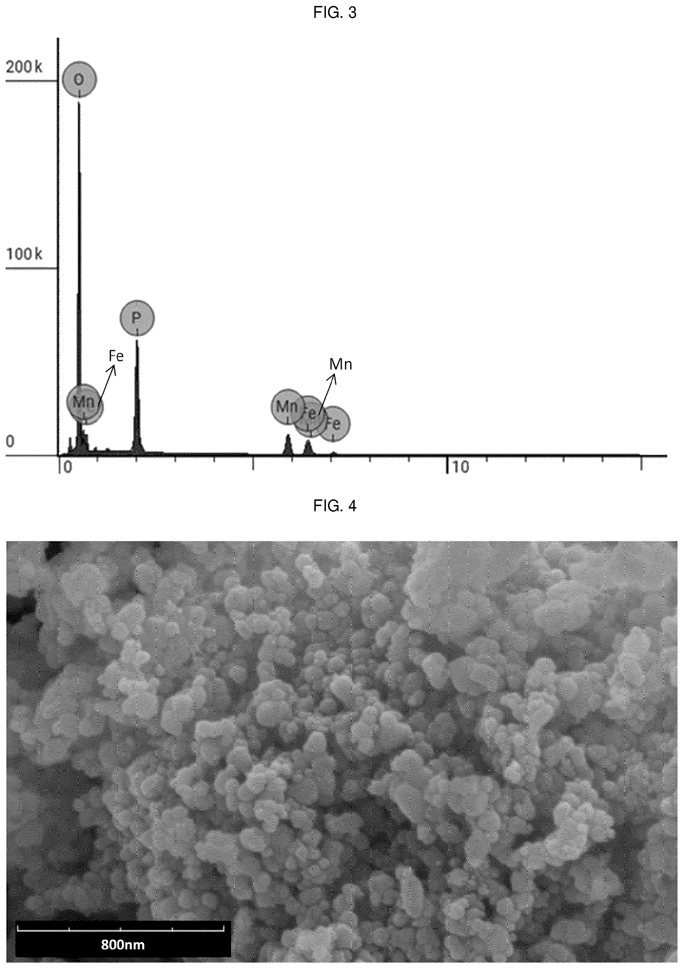

During the SEM testing process, the obtained lithium manganese iron phosphate was formed a tangent plane, and the EDS results of its elemental composition are shown in FIG. 3. In FIG. 3, the elements that are not displayed due to overlapping labels have been marked with arrows.

From the analysis of the above figure, it can be seen that the element distribution is uniform, especially the arrangement of manganese and iron elements are uniform, which avoids the segregation of manganese elements and thus increases the capacity of the material. The segregation of manganese alone can cause the aggregation of lithium manganese phosphate. The ion conductivity of lithium manganese phosphate is very poor, and lithium cannot be removed, resulting in low charging and discharging capacity. However, the present embodiment avoids the occurrence of this situation due to the uniform mixing of manganese and iron, thus making the capacity higher and the subsequent cycling performance more excellent.

### Example 2

Preparation of a lithium manganese iron phosphate material:
1. An electrolytic iron powder was used and 3 mol/L phosphoric acid solution was added, reacted until the endpoint pH was 2, the reaction temperature was 50°C, filtered to obtain a ferrous dihydrogen phosphate solution;
2. manganese acetate was added to the ferrous dihydrogen phosphate solution, wherein a
   molar ratio of the iron in the ferrous dihydrogen phosphate solution to the manganese in the added manganese acetate was 1:0.8, then urea was added with a molar amount being 2.5 times that of ferrous dihydrogen phosphate, stirred to react in a sealed reaction vessel under protection of introduced nitrogen gas, and the oxygen content in the sealed reaction vessel was reduced to below 100 ppm by introduction of nitrogen gas, the solution was heated to react at a stirring speed of 120 r/min and a temperature of 95°C, then the endpoint pH was controlled at 5.5 to continue the reaction for 30 min under this condition to obtain a ferrous manganese phosphate slurry;
3. urea and lithium chloride was further added to the ferrous manganese phosphate slurry, wherein a molar ratio of lithium in the added lithium salt to the sum of the added ferrous salt and manganese salt was 1.08:1, a molar ratio of the added urea to the urea added in step (2) was 0.6:1, the temperature was further maintained at 100°C for reacting, nitrogen gas was further introduced to keep the oxygen content in the sealed reaction vessel below 50 ppm, the endpoint pH was controlled to 7.5 to continue the reaction for 30 min under this condition, then filtered and washed with pure water until the conductivity of the washing water was ≤200 µS/cm, and the washing was stopped to obtain a first product;
4. pure water was added to the first product for slurrying, and after slurrying, the solid content of the slurry was 30 wt%, then the mixture of glucose and water-soluble starch with a mass ratio of 1:1 was added as a carbon source (the carbon source was converted into a carbon layer in the subsequent calcination process), and after stirring and dissolving, spray drying was performed, the particle size of a spray material was 3 µm, and the water content was controlled at ≤1 wt% to obtain a spray drying material, that is, a second product; and
5. the spray drying material was put into an atmosphere furnace for calcination, the calcination process was performed under the protection of nitrogen atmosphere, wherein the heating rate was 300°C/h, the temperature was raised to 700°C to be kept for 15 h at this temperature, and during the calcination process, nitrogen gas was constantly introduced into the furnace, at the same time, an induced draft fan was connected externally to extract waste gas, the pressure in the furnace was 40 Pa higher than the external atmospheric pressure, the oxygen content in the atmosphere furnace was maintained below 5 ppm, the CO content was below 50 ppm, the hydrogen content was below 100 ppm, the humidity was below 3%, then the material temperature was reduced to ≤100°C before being discharged, the material after calcination was crushed and sieved by a 150 mesh ultrasonic vibrating screen, an electromagnetic iron remover was used for iron removal, the packaging process was vacuum packed in a constant temperature and humidity room at a temperature of 20°C-25°C and a humidity of ≤10%, and the lithium manganese iron phosphate material with a mass fraction of the carbon layer of 2.96wt% and the molecular formula of the core of Li_{1.02}Mn_{0.45}Fe_{0.55}(PO₄)_{0.98} was obtained.

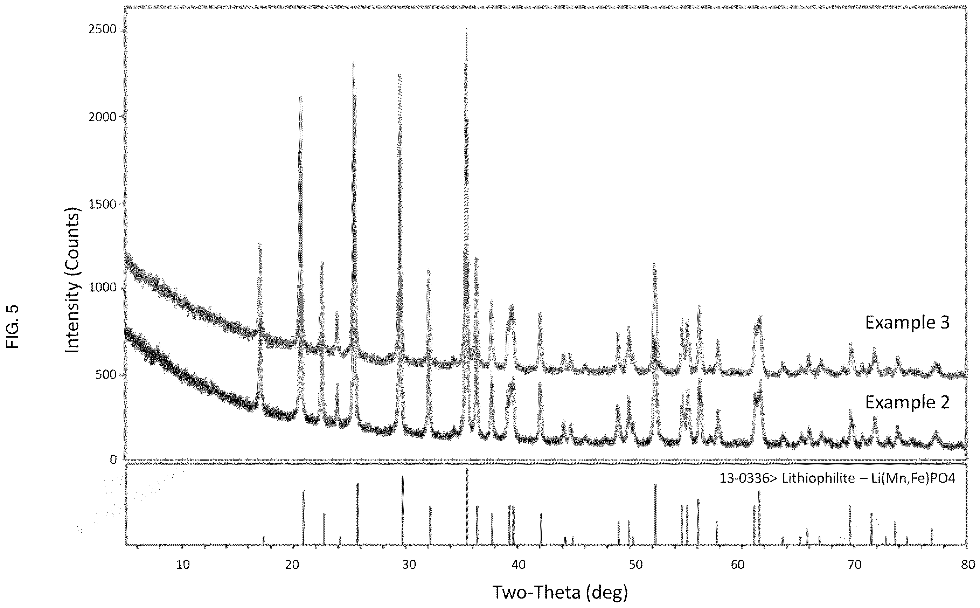

An SEM result diagram of the obtained lithium manganese iron phosphate cathode electrode material is shown in FIG. 4, and an XRD result diagram is shown in FIG. 5.

### Example 3

Preparation of a lithium manganese iron phosphate material:
1. An electrolytic iron powder was used and 6 mol/L phosphoric acid solution was added, reacted until the endpoint pH was 2.5, the reaction temperature was 50°C, filtered to obtain a ferrous dihydrogen phosphate solution;
2. manganese acetate was added to the ferrous dihydrogen phosphate solution, wherein a molar ratio of the iron in the ferrous dihydrogen phosphate solution to the manganese in the added manganese acetate was 1:0.2, then urea was added with a molar amount being 2.2 times that of ferrous dihydrogen phosphate, stirred to react in a sealed reaction vessel under protection of introduced nitrogen gas, and the oxygen content in the sealed reaction vessel was reduced to below 100 ppm by introduction of nitrogen gas, the solution was heated to react at a stirring speed of 60 r/min and a temperature of 105°C, then the endpoint pH was controlled at 4.5 to continue the reaction for 60 min under this condition to obtain a ferrous manganese phosphate slurry;
3. urea and lithium chloride was further added to the ferrous manganese phosphate slurry, wherein a molar ratio of the lithium in the added lithium salt to the sum of the added ferrous salt and manganese salt was 1.1:1, a molar ratio of the added urea to the urea added in step (2) was 0.3:1, the temperature was further maintained at 110°C for reacting, nitrogen gas was further introduced to keep the oxygen content in the sealed reaction vessel below 50 ppm, the endpoint pH was controlled to 7.1 to continue the reaction for 60 min under this condition, then filtered and washed with pure water until the conductivity of the washing water was ≤200 µS/cm, and the washing was stopped to obtain a first product;
4. pure water was added to the first product for slurrying, and after slurrying, the solid content of the slurry was 30 wt%, then sucrose was added as a carbon source (which was converted into a carbon layer in the subsequent calcination process), and after stirring and dissolving, spray drying was performed, the particle size of a spray material was 8 µm, and the water content was controlled at ≤41 wt% to obtain a spray drying material, that is, a second product; and
5. the spray drying material was put into an atmosphere furnace for calcination, the calcination process was performed under the protection of nitrogen atmosphere, wherein the heating rate was 400°C/h, the temperature was raised to 750°C to be kept for 8 h at this temperature, and during the calcination process, nitrogen gas was constantly introduced into the furnace, at the same time, an induced draft fan was connected externally to extract waste gas, the pressure in the furnace was 40 Pa higher than the external atmospheric pressure, the oxygen content in the atmosphere furnace was maintained below 5 ppm, the CO content was below 50 ppm, the hydrogen content was below 100 ppm, the humidity was below 3%, then the material temperature was reduced to ≤100°C before being discharged, the material after calcination was crushed and sieved by a 150 mesh ultrasonic vibrating screen, an electromagnetic iron remover was used for iron removal, the packaging process was vacuum packed in a constant temperature and humidity room at a temperature of 20°C-25°C and a humidity of ≤10%, and the lithium manganese iron phosphate material with a mass fraction of the carbon layer of 1.06 wt% and the molecular formula of the core of Li_{0.79}Mn_{0.18}Fe_{0.82}(PO₄)_{1.03} was obtained.

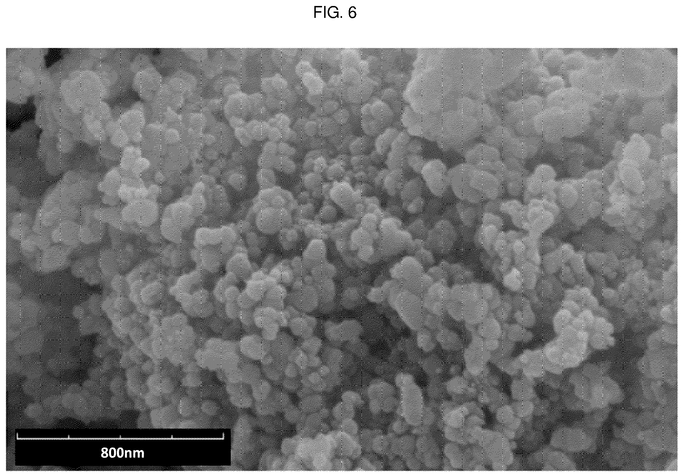

An SEM result diagram of the obtained lithium manganese iron phosphate cathode electrode material is shown in FIG. 6, and an XRD result diagram is also shown in FIG. 5.

### Example 4

### Preparation of a lithium manganese iron phosphate material:

The difference between this embodiment and Example 1 is only in step 1, specifically:
1. An electrolytic iron powder was used and 2 mol/L phosphoric acid solution was added, reacted until the endpoint pH was 3.0 at the reaction temperature of 80°C, and filtered to obtain a ferrous dihydrogen phosphate solution.

The remaining steps were consistent with Example 1.

### Example 5

### Preparation of a lithium manganese iron phosphate material:

The difference between this embodiment and Example 1 is only in step 1, specifically:
1. An electrolytic iron powder was used and 7 mol/L phosphoric acid solution was added, reacted until the endpoint pH was 1.5, the reaction temperature was 40°C, filtered to obtain a ferrous dihydrogen phosphate solution.

The remaining steps were consistent with Example 1.

### Example 6

### Preparation of a lithium manganese iron phosphate material:

The difference between this embodiment and Example 1 is only in step 2, specifically:
2. manganese acetate was added to the ferrous dihydrogen phosphate solution, wherein a molar ratio of iron in the ferrous dihydrogen phosphate solution to the manganese in the added manganese acetate was 1:0.1, then urea was added with a molar amount being 2 times that of ferrous dihydrogen phosphate, stirred to react in a sealed reaction vessel under protection of introduced nitrogen gas, and the oxygen content in the sealed reaction vessel was reduced to below 100 ppm by introduction of nitrogen gas, the solution was heated to react at a stirring speed of 150 r/min and a temperature of 110°C, then the endpoint pH was controlled at 4.0 to continue the reaction for 70 min under this condition to obtain a ferrous manganese phosphate slurry.

The remaining steps were consistent with Example 1.

### Example 7

### Preparation of a lithium manganese iron phosphate material:

The difference between this embodiment and Example 1 is only in step 2, specifically:
2. manganese acetate was added to the ferrous dihydrogen phosphate solution, wherein a molar ratio of the iron in the ferrous dihydrogen phosphate solution to the manganese in the added manganese acetate was 1:1.2, then urea was added with a molar amount being 3 times that of ferrous dihydrogen phosphate, stirred to react in a sealed reaction vessel under protection of introduced nitrogen gas, and the oxygen content in the sealed reaction vessel was reduced to below 100 ppm by introduction of nitrogen gas, the solution was heated to react at a stirring speed of 50 r/min and a temperature of 90°C, then the endpoint pH was controlled at 6.0 to continue the reaction for 20 min under this condition to obtain a ferrous manganese phosphate slurry.

The remaining steps were consistent with Example 1.

### Example 8

### Preparation of a lithium manganese iron phosphate material:

The difference between this embodiment and Example 1 is only in step 3, specifically:
3. urea and lithium chloride was further added to the ferrous manganese phosphate slurry, wherein a molar ratio of the lithium in the added lithium salt to the sum of the added ferrous salt and manganese salt was 1.0:1, a molar ratio of the added urea to the urea added in step (2) was 0.2:1, the temperature was further maintained at 120°C for reacting, nitrogen gas was further introduced to keep the oxygen content in the sealed reaction vessel below 50 ppm, the endpoint pH was controlled to 7.0 to continue the reaction for 70 min under this condition, then filtered and washed with pure water until the conductivity of the washing water was ≤200 µS/cm, and the washing was stopped to obtain a first product.

The remaining steps were consistent with Example 1.

### Example 9

### Preparation of a lithium manganese iron phosphate material:

The difference between this embodiment and Example 1 is only in step 3, specifically:
3. urea and lithium chloride was further added to the ferrous manganese phosphate slurry, wherein a molar ratio of the lithium in the added lithium salt to the sum of the added ferrous salt and manganese salt was 1.2:1, a molar ratio of the added urea to the urea added in step (2) was 0.8:1, the temperature was further maintained at 90°C for reacting, nitrogen gas was further introduced to keep the oxygen content in the sealed reaction vessel below 50 ppm, the endpoint pH was controlled to 8.0 to continue the reaction for 20 min under this condition, then filtered and washed with pure water until the conductivity of the washing water was ≤200 µS/cm, and the washing was stopped to obtain a first product.

The remaining steps were consistent with Example 1.

### Example 10

### Preparation of a lithium manganese iron phosphate material:

The difference between this embodiment and Example 1 is only in step 5, specifically:
5. the spray drying material was put into an atmosphere furnace for calcination, the calcination process was performed under the protection of nitrogen atmosphere, wherein the heating rate was 250°C/h, the temperature was raised to 650°C to be kept for 18 h at this temperature, and then the conditions remained consistent with those in Example 1.

The remaining steps were all consistent with Example 1.

### Example 11

### Preparation of a lithium manganese iron phosphate material:

The difference between this embodiment and Example 1 is only in step 5, specifically:
5. the spray drying material was put into an atmosphere furnace for calcination, the calcination process was performed under the protection of nitrogen atmosphere, wherein the heating rate was 450°C/h, the temperature was raised to 800°C to be kept for 6 h at this temperature, and then the conditions remained consistent with those in Example 1.

The remaining steps were all consistent with Example 1.

### Comparative example 1

### Preparation of a lithium manganese iron phosphate material:

1. A solid material was obtained by mixing ferrous dihydrogen phosphate, manganese acetate, lithium chloride, and water-soluble starch, wherein a molar ratio of iron, manganese, and lithium elements in the solid material was 0.5:0.5:1.09;
2. the solid material was placed in an atmosphere furnace for calcination, the calcination process was performed under the protection of nitrogen atmosphere, wherein the heating rate was 350°C/h, the temperature was raised to 725°C to be kept for 12 h at this temperature, and during the calcination process, nitrogen gas was constantly introduced into the furnace, at the same time, an induced draft fan was connected externally to extract waste gas, the pressure in the furnace was 40 Pa higher than the external atmospheric pressure, the oxygen content in the atmosphere furnace was maintained below 5 ppm, the CO content was below 50 ppm, the hydrogen content was below 100 ppm, the humidity was below 3%, then the material temperature was reduced to ≤100°C before being discharged, the material after calcination was crushed and sieved by a 150 mesh ultrasonic vibrating screen, an electromagnetic iron remover was used for iron removal, the packaging process was vacuum packed in a constant temperature and humidity room at a temperature of 20°C-25°C and a humidity of ≤10%, and the lithium manganese iron phosphate material with a mass fraction of the carbon layer of 1.85% was obtained.

### II. Testing method

### Performance testing of lithium manganese iron phosphate material

**1. Element content:** obtained through ICP-OES testing.
**2. Manganese dissolution amount:** 1 g of a sample to be tested was added to 100 mL of deionized water, stirred and dissolved at a temperature of 25°C for 30 min, and then filtered. The obtained filtrate was measured for manganese element content by ICP-OES, which was the manganese dissolution amount.
**3. Free lithium:** measured by automatic potentiometric titration method according to SJT 11794-2021.
**4. Magnetic substance content:** 100 g of material was weighed, poured into a plastic bottle with a lid, 1000 g of pure water was added, then 8000 GS of magnetic particles was added, and the outer surface of the magnetic particles was protected by polytetrafluoroethylene, and then the lid was closed tightly, the plastic bottle was placed horizontally and rotated at a speed of 10-20 r/min for 30-45 min, rotating was stopped, the magnetic particles were removed, 1000 g of pure water was added and put into the plastic bottle, the lid was closed tightly, the plastic bottle was placed horizontally and rotated at a speed of 10-20 r/min for 5-10 min, rotating was stopped, the magnetic particles were removed, aqua regia was added to dissolve them, the dissolution solution was measured using ICP, dilute with pure water to constant volume, then nickel, chromium, copper, zinc, and iron content was measured, the total mass of the nickel, chromium, copper, zinc, and iron was calculated, and divided by the weight of the material to obtain the magnetic foreign matter content of the material.
**5. Water content:** tested using Karl Fischer (KF) method.
**6. D50:** according to GB/T 19077, the particle size analysis using laser diffraction method.
**7. BET:** according to GB/T 19587, the gas adsorption BET method was used to determine the specific surface area of solid substances.
**8. Compaction density:** according to GB/T 24533, the powder compaction density was determined.
**9. Tap density:** according to GB/T 5162-2021, the powder tap density is determined.
**10. Powder resistivity:** tested using four probe method under a pressure of 10 MPa.

**Half cell performance testing:** half cell samples were prepared from the cathode electrode materials obtained in each example and comparative example, and their first charging discharging capacity and first discharging efficiency at 0.2C were tested.

The results obtained from the above tests are shown in Tables 1 to 4.

### III. Analysis of test results for various examples and comparative examples

**Table 1**

| % | Li | Mn | Fe | P | C |
|---|---|---|---|---|---|
| Example 1 | 4.52 | 16.87 | 17.16 | 19.64 | 1.85 |
| Example 2 | 4.55 | 15.98 | 19.46 | 19.47 | 2.96 |
| Example 3 | 4.48 | 6.37 | 27.87 | 19.17 | 1.06 |
| Example 4 | 4.51 | 16.89 | 17.13 | 19.67 | 1.83 |
| Example 5 | 4.53 | 16.84 | 17.19 | 19.61 | 1.84 |
| Example 6 | 4.50 | 3.09 | 30.91 | 19.57 | 1.87 |
| Example 7 | 4.52 | 18.55 | 15.45 | 19.64 | 1.82 |
| Example 8 | 4.38 | 16.74 | 17.37 | 19.75 | 1.87 |
| Example 9 | 4.69 | 16.81 | 17.29 | 19.57 | 1.82 |
| Example 10 | 4.51 | 16.82 | 17.11 | 19.69 | 1.89 |
| Example 11 | 4.50 | 16.78 | 17.22 | 19.58 | 1.82 |
| Comparative example 1 | 4.55 | 16.81 | 17.12 | 19.69 | 1.87 |

**Table 2**

| ppm | Manganese dissolution | Free lithium | Magnetic substance content | Water content |
|---|---|---|---|---|
| Example 1 | 26.8 | 354 | 0.11 | 451 |
| Example 2 | 31.6 | 278 | 0.09 | 567 |
| Example 3 | 32.6 | 421 | 0.06 | 325 |
| Example 4 | 27.3 | 347 | 0.10 | 447 |
| Example 5 | 26.9 | 338 | 0.12 | 467 |
| Example 6 | 27.1 | 312 | 0.11 | 408 |
| Example 7 | 30.2 | 325 | 0.10 | 417 |
| Example 8 | 29.5 | 311 | 0.12 | 617 |
| Example 9 | 32.7 | 768 | 0.12 | 698 |
| Example 10 | 32.3 | 427 | 0.09 | 499 |
| Example 11 | 27.1 | 398 | 0.12 | 411 |
| Comparative example 1 | 43.7 | 368 | 0.18 | 498 |

**Table 3**

| | D50 particle size, µm | Specific surface area, m²/g | Compaction density, g/mL | Tap density, g/mL | Powder resistivity, Ω·cm |
|---|---|---|---|---|---|
| Example 1 | 1.45 | 16.7 | 2.35 | 1.02 | 18.5 |
| Example 2 | 1.89 | 18.7 | 2.29 | 0.98 | 12.6 |
| Example 3 | 1.68 | 12.4 | 2.41 | 1.13 | 24.7 |
| Example 4 | 1.43 | 18.1 | 2.31 | 1.01 | 16.2 |
| Example 5 | 1.47 | 13.4 | 2.38 | 1.11 | 19.7 |
| Example 6 | 1.41 | 17.5 | 2.31 | 1.09 | 27.5 |
| Example 7 | 1.38 | 18.9 | 2.29 | 0.96 | 26.7 |
| Example 8 | 1.40 | 17.5 | 2.33 | 1.01 | 25.8 |
| Example 9 | 1.41 | 12.3 | 2.26 | 0.91 | 27.1 |
| Example 10 | 1.53 | 14.5 | 2.29 | 0.92 | 27.9 |
| Example 11 | 1.67 | 11.7 | 2.43 | 1.15 | 12.8 |
| Comparative example 1 | 1.49 | 13.8 | 2.27 | 1.08 | 36.8 |

**Table 4**

| | First charging specific capacity, mAh/g | First discharging specific capacity, mAh/g | First discharging efficiency, % |
|---|---|---|---|
| Example 1 | 159.3 | 157.3 | 98.7 |
| Example 2 | 159.9 | 156.8 | 98.1 |
| Example 3 | 159.8 | 156.1 | 97.7 |
| Example 4 | 158.6 | 155.7 | 98.2 |
| Example 5 | 158.2 | 154.9 | 97.9 |
| Example 6 | 157.9 | 155.6 | 98.5 |
| Example 7 | 157.2 | 154.7 | 98.4 |
| Example 8 | 155.7 | 152.7 | 98.1 |
| Example 9 | 157.7 | 154.5 | 98.0 |
| Example 10 | 158.2 | 154.7 | 99.1 |
| Example 11 | 159.2 | 155.8 | 97.9 |
| Comparative example 1 | 152.6 | 150.5 | 98.6 |

From the above-mentioned results, it can be seen that the embodiments described in the present application have achieved the preparation of the lithium manganese iron phosphate material with low manganese dissolution amount, low magnetic substance amount, and low powder resistivity. Specifically:
Comparing each Examples with the Comparative example 1, it can be seen that the preparation method adopted in the present application has superior performance compared to the conventional manganese iron lithium phosphate material prepared by solid-phase method. After being used as a cathode electrode material to prepare a lithium-ion battery, the corresponding lithium-ion battery exhibits higher first charging specific capacity, first discharging specific capacity, and first discharging efficiency.

Comparing Examples 1 to 3 with Examples 4 and 5, it can be seen that in the preparation process of the ferrous dihydrogen phosphate solution, the preferred temperature of the first reaction is 50°C-70°C, a preferred pH value of the ferrous dihydrogen phosphate solution is 2.0-2.5, and a preferred concentration of the phosphoric acid solution is 3 mol/L-6 mol/L, and the ferrous dihydrogen phosphate solution with better dispersibility can be obtained, which can promote the improvement of the particle size uniformity of the obtained intermediate and final product, thereby obtaining a lithium iron manganese phosphate material with better electrochemical performance.

Comparing Examples 1 to 3 with Examples 6 and 7, it can be seen that in the preparation process of the ferrous manganese phosphate slurry, a molar ratio of the first alkali source to ferrous dihydrogen phosphate in the ferrous dihydrogen phosphate solution is preferably (2.2-2.5):1, a molar ratio of the manganese element in the manganese salt to the iron element in the ferrous dihydrogen phosphate solution is preferably (0.2-1):1. At the same time, the preferred temperature of the second reaction is 95°C-105°C, the stirring speed is 60 r/min-120 r/min, and a endpoint pH value of the second reaction is 4.5-5.5. After reaching the endpoint pH value of the second reaction, the reaction is further performed for 30 min-60 min, an intermediate product with more stable structure and using ferrous phosphate as the core and manganese phosphate as the shell can be obtained, and the electrochemical performance of the final obtained lithium iron manganese phosphate material can be improved.

Comparing Examples 1 to 3 with Examples 8 and 9, it can be seen that in the process of preparing the first product from the ferrous manganese phosphate slurry, a preferred molar ratio of the sum of the iron element in the ferrous dihydrogen phosphate solution and the manganese element in the manganese salt to the lithium element in the lithium salt is 1:(1.08-1.1), a molar ratio of the second alkali source to the first alkali source is (0.3-0.6):1. At the same time, during the reaction process, the preferred temperature of the third reaction is 100°C-110°C, and a endpoint pH value of the third reaction is 7.1-7.5. After reaching the endpoint pH value of the third reaction, the reaction is performed for 30 min-60 min, which can promote better coordination of the amount of urea added to the reaction system twice, thereby better controlling the change in the pH value of the system and obtaining a lithium manganese iron phosphate material with more outstanding electrochemical performance.

Comparing Examples 1 to 3 with Examples 10 and 11, it can be seen that in the final calcination process to obtain the lithium manganese iron phosphate material, the preferred heating rate for calcination is 300°C/h-400°C/h, the holding temperature is 700°C-750°C, and the holding time is 8 h-15 h, which can more effectively suppress the generation of gases such as H₂ and CO, thus better protecting the integrity of the carbon coating layer and reducing the production of magnetic substances, resulting in lower magnetic substance content and better electrochemical performance in the obtained lithium manganese iron phosphate product.

It should be noted that the present application is not limited to the above-mentioned embodiments. The above-mentioned embodiments are merely examples, and embodiments having substantially the same constructions and the same effects as the technical idea within the scope of the technical solutions of the present application are all included in the technical scope of the present application. In addition, without departing from the essence of the present application, various modifications made to the embodiments that can be conceived by those skilled in the art, and other manners constructed by combining some of the constituent elements in the embodiments are also included in the scope of the present application.

## Claims

1. A lithium manganese iron phosphate material, wherein the molecular formula of the core of the lithium manganese iron phosphate material is LiₓMn_{y}Fe_{1-y}(PO₄)_{z}, wherein 0.7≤x≤1.1, 0.15≤y<1, 0.9≤z≤1.05, the manganese dissolution amount of the lithium manganese iron phosphate material is 25 ppm-33 ppm, the powder resistivity is 12 Ω·cm-28 Ω·cm, and the amount of magnetic substance is 0.05 ppm-0.12 ppm.

2. The lithium manganese iron phosphate material according to claim 1, wherein the lithium manganese iron phosphate material further comprises a carbon layer arranged on the surface of the core;
a D50 particle size of the lithium manganese iron phosphate material is 1.35 µm-1.9 µm; and
based on a weight of the lithium manganese iron phosphate material as 100%, a mass fraction of the carbon layer is 1 %-3%.

3. The lithium manganese iron phosphate material according to claim 1 or 2, wherein in the molecular formula LiₓMn_{y}Fe_{1-y}(PO₄)_{z} of the core of the lithium manganese iron phosphate material, 1≤(1-y)/y≤5.

4. A preparation method for a lithium manganese iron phosphate material, wherein the preparation method for the lithium manganese iron phosphate material includes:
mixing an iron source with a phosphoric acid solution, performing a first reaction, and obtaining a ferrous dihydrogen phosphate solution;
adding a manganese salt and a first alkali source to the ferrous dihydrogen phosphate solution for a second reaction to obtain a ferrous manganese phosphate slurry;
adding a lithium salt and a second alkali source to the ferrous manganese phosphate slurry, performing a third reaction, filtering and washing to obtain a first product, slurrying and drying the first product to obtain a second product, and calcining the second product to obtain a lithium manganese phosphate material; and the first and second alkali sources are urea.

5. The preparation method for the lithium manganese iron phosphate material according to claim 4, wherein the molar ratio of the first alkali source to ferrous dihydrogen phosphate in the ferrous dihydrogen phosphate solution is (2.2-2.5):1;
preferably, a molar ratio of the second alkali source to the first alkali source is (0.3-0.6):1;
preferably, a molar ratio of the manganese element in the manganese salt to the iron element in the ferrous dihydrogen phosphate solution is (0.2-1):1, and a molar ratio of the sum of the manganese element in the manganese salt and the iron element in the ferrous dihydrogen phosphate solution to the lithium element in the lithium salt is 1:(1.08-1.1); and
more preferably, the iron source is iron sheet and/or iron powder, the manganese salt is selected from one or more of manganese sulfate, manganese chloride, and manganese acetate, and the lithium salt is selected from one or more of lithium sulfate, lithium chloride, and lithium acetate.

6. The preparation method for lithium the manganese iron phosphate material according to claim 4 or 5, wherein a temperature of the first reaction is 50°C-70°C, and a pH value of the ferrous dihydrogen phosphate solution is 2.0-2.5; and
a concentration of the phosphoric acid solution is 3 mol/L-6 mol/L.

7. The preparation method for the lithium manganese iron phosphate material according to any one of claims 4 to 6, wherein a temperature of the second reaction is 95°C-105°C, and a endpoint pH value of the second reaction is 4.5-5.5;
preferably, the second reaction further comprises continuing to react for 30 min-60 min after reaching the endpoint pH value of the second reaction; and
preferably, the second reaction is performed under conditions where the oxygen content is less than 100 ppm.

8. The preparation method for the lithium manganese iron phosphate material according to any one of claims 4 to 7, wherein a temperature of the third reaction is 100°C-110°C, and a endpoint pH value of the third reaction is 7.1-7.5;
preferably, the third reaction further comprises continuing to react for 30 min-60 min after reaching the endpoint pH value of the third reaction; and
preferably, the third reaction is performed under conditions where the oxygen content is less than 50 ppm.

9. The preparation method for the lithium manganese iron phosphate material according to any one of claims 4 to 8, wherein the preparation method for the lithium manganese iron phosphate material also comprises: slurrying the first product to obtain a first product slurry, adding a carbon source to the first product slurry, and performing spray drying to obtain the second product;
preferably, a solid content of the first product slurry is 30%-40%; a particle size of the second product is 5 µm-8 µm, and a mass fraction of water in the second product is less than or equal to 1%; and
preferably, the carbon source is a water-soluble carbon source, more preferably one or more of water-soluble starch, sucrose, glucose, and polyethylene glycol.

10. The preparation method for the lithium manganese iron phosphate material according to any one of claims 4 to 9, wherein the calcination is performed under the conditions of the oxygen content less than 5 ppm and humidity less than 3%, and the holding temperature of the calcination is 700°C-750°C, and the holding time of the calcination is 8 h-15 h.

11. A cathode electrode sheet, wherein the cathode electrode sheet comprises the lithium manganese iron phosphate material according to any one of claims 1 to 3, or the lithium manganese iron phosphate material prepared by the preparation method for the lithium manganese iron phosphate material according to any one of claims 4 to 10.

12. A lithium-ion battery comprising the cathode electrode sheet according to claim 11.
